# EUROPEAN PATENT APPLICATION

(11) **EP 1 621 807 A1**
(43) Date of publication of application: **01.02.2006**
(21) Application number: 04730628.7
(22) Date of filing: 30.04.2004
(51) Int. Cl.: F17C 1/16, F17C 11/00, B29D 22/00

(54) **METHOD OF MANUFACTURING GAS CYLINDER, GAS CYLINDER, AND METHOD OF OCCLUDING AND DISCHARGING GAS**

(30) Priority: 02.05.2003 JP 2003126898
(71) Applicant: Nippon Oil Corporation, Tokyo 105-8412 (JP)
(72) Inventor: OSHIMA, Shinji, c/o NIPPON OIL CORPORATION, Yokohama-shi, Kanagawa 2310815 (JP); KUDE, Yukinori, c/o NIPPON OIL CORPORATION, Yokohama-shi, Kanagawa 2310815 (JP); MIZUTA, Haruyoshi, c/o NIPPON OIL CORPORATION, Yokohama-shi, Kanagawa 2310815 (JP)
(74) Representative: Hallybone, Huw George
(86) International application number: PCT/JP2004/005838
(87) International publication number: WO 2004/097284

(57) **Abstract**

The present invention provides a method for easily producing a gas cylinder which includes a shaped product of carbonaceous gas storage material capable of achieving practical gas storage capacity, which allows full exploitation of excellent gas storage property of the carbonaceous gas storage material, and which has excellent pressure resistance and is expected to be safe. The invention also provides the gas cylinder obtained by the method, and a method for storing/discharging gas using the cylinder, which provides stable storage and discharge of gas at high efficiency. The present production method includes the steps of preparing a gas cylinder-shaped product by shaping a carbonaceous gas storage material into the form of a gas cylinder capable of being fitted with a cylinder mouthpiece, fixing a cylinder mouthpiece on said gas cylinder shaped product, first covering of the outer surface of the gas cylinder-shaped product with a substantially gas barrier material, and second covering of the outer surface of t a covering of the gas barrier material, with fiber reinforced plastic.

## Description

The present invention relates to a gas cylinder, including a hydrogen storage cylinder, that may store fuel gas, such as hydrogen, safely at high efficiency, as well as a method for producing such a gas cylinder, and a method for storing/discharging gas using the gas cylinder.

Most automobiles are now powered by engines running on gasoline or diesel oil. Such automobiles pose various environmental problems, such as CO₂ emission, and are thought to be gradually replaced by fuel cell vehicles in the future. Fuel cell vehicles equipped with a 35 MPa gas cylinder are currently on the market, but still have various problems to be solved for popularization, such as cost and mileage. For example, for achieving practical mileage, a gas cylinder is said to be required to withstand ultra-high pressure of about 70 MPa. However, such a cylinder has not yet been put into practical use due to problems in safety and difficulty in gas introduction.

As means for eliminating necessity to increase the pressuretotheultra-highlevel,for example,carbonaceous gas storage materials are attracting attention, such as carbon nanotubes, carbon aerogel, and activated carbon, which have high storage capacity of gas, such as hydrogen, and lighter weight compared to hydrogen storage alloys, such as LaNi alloys, that have conventionally been proposed. The carbonaceous gas storage materials are generally proposed to be packed for use in a pressure resistant gas cylinder made of steel or aluminum alloys.

However, the carbonaceous gas storage materials have a low bulk density, and thus are hard to be packed at high density. On the other hand, if the carbonaceous gas storage material is forcedly packed at a high density in a high-pressure gas cylinder usually equipped with a mouthpiece with a gas introducing function, the cylinder and the mouthpiece will undergo excessive stress, and the threads on the mouthpiece are contaminated with the carbonaceous material, which may result in difficulties in thread fastening.

Thus irrespective of their excellent gas storage capacity, the carbonaceous gas storage materials may be packed in a gas cylinder only at a limited density, and hard to provide practical gas storage capacity.

As alternative means, there has recently been proposed a methane gas storage material composed of a metal carboxylate complex of a high volume density, or a hydrogen storage body wherein a porous material is filled with a carbonaceous material (for example, see Patent Publications 1 and 2).

However, no technology has hitherto been proposed for making effective use of and putting into practical use of the excellent gas storage property originated in the carbonaceous storage materials by improving the method of producing a gas cylinder.
Patent Publication 1: JP-2000-309592-A
Patent Publication 2: JP-2000-281324-A

It is an object of the present invention to provide a gas cylinder, such as a hydrogen storage cylinder, which includes a shaped product of a carbonaceous gas storage material capable of achieving practical gas storage capacity, which allows full exploitation of excellent gas storage property of the carbonaceous gas storage material, and which has excellent pressure resistance and is expected to be safe, and to provide a method for producing such a gas cylinder that allows easy production thereof.

It is another object of the present invention to provide a method for storing/discharging gas that provides stable storage and discharge of gas, such as hydrogen, at high efficiency.

According to the present invention, there is provided a method for producing a gas cylinder comprising the steps of:
preparing a gas cylinder-shaped product by shaping a carbonaceous gas storage material into the form of a gas cylinder capable of being fitted with a cylinder mouthpiece,
fixing a cylinder mouthpiece on said gas cylinder-shaped product,
first covering of the outer surface of the gas cylinder-shaped product with a substantially gas barrier material, and
second covering of the outer surface of a covering of the gas barrier material, with fiber reinforced plastic.

According to the present invention, there is also provided a gas cylinder produced by the above method, comprising:
a gas cylinder-shaped product including a carbonaceous gas storage material;
a covering layer covering said gas cylinder-shaped product and having a gas barrier material layer and a fiber reinforced plastic layer; and
a mouthpiece having a gas introducing function and a gas discharging function.

According to the present invention, there is further provided a method for storing/discharging gas comprising:
a gas storing step including connecting the mouthpiece of the gas cylinder mentioned above to a gas introduction pipe, introducing gas through the gas introduction pipe into the gas cylinder, and sealing the gas in the gas cylinder, and
a gas discharging step including discharging the gas sealed in the gas cylinder.

The method for producing a gas cylinder according to the present invention provides simple production of a gas cylinder, such as a hydrogen storage cylinder, which includes a shaped product of a carbonaceous gas storage material capable of achieving practical gas storage capacity, which allows full exploitation of excellent gas storage property of the carbonaceous gas storage material, and which has excellent pressure resistance and is expected to be safe. Accordingly, production of a gas cylinder filled at a high density with a carbonaceous gas storage material, is facilitated, which was difficult according to the conventional method, wherein the carbonaceous gas storage material is introduced through the opening of a high-pressure cylinder.

The present invention will now be explained in detail.

According to the method for producing a gas cylinder of the present invention, first the step of preparing a gas cylinder-shaped product is performed by shaping a carbonaceous gas storage material into the form of a gas cylinder capable of being fitted with a cylinder mouthpiece.

The carbonaceous gas storage material to be used in the preparation step may be any gas storage material as long as it is of light weight and contains carbon having large capacity per unit mass for storing gas, such as hydrogen. Examples of the material may include activated carbon, activated carbon fibers, single-walled carbon nanotubes,multi-walled carbon nanotubes,carbon nanohorns, carbon aerogel, carbon cryogel, carbon xerogel, exfoliated carbon fibers, graphite intercalation compounds, and charcoals obtained by charring natural products.

Examples of the graphite intercalation compounds may include graphite-Li, graphite-Na, graphite-K, graphite-Rb, graphite-Cs, graphite-Ca, graphite-Sr, graphite-Ba, graphite-HNO₃, graphite-H₂SO₄, graphite-HClO₄, graphite-F, and graphitic acid.

The gas storage capacity of the carbonaceous gas storage material, when the gas to be stored is hydrogen, is usually 0.2 to 2 mass%, preferably 0.5 to 2 mass%, at 30 °C at 3 MPa. If the storage capacity is less than 0.2 mass%, the performance of the resulting hydrogen storage cylinder is too low. Higher hydrogen storage capacity is preferred, but usually a carbonaceous hydrogen storage material having storage capacity of over 2 mass% is not readily available.

The gas storage capacity of the carbonaceous gas storage material may be measured by volumetric method. Upon measuring, care should be taken about the points described in "Tanso (carbon)", 2002, No. 205, p231-237, The Carbon Society of Japan.

The carbonaceous gas storage material may be prepared according to a conventional method or the like, or may be commercially available.

In the preparation step, the term, "the form of a gas cylinder capable of being fitted with a cylinder mouthpiece" does not mean a particular shape, but includes any shape that has at least one recess in which a flange of a cylinder mouthpiece having a gas introducing function may be fitted, and that is capable of providing the functions of a gas cylinder.

In the preparation step, the shaping may be performed, for example, by compression molding or hot forming.

The compression molding or hot forming may be performed, for example, using a mold of a gas cylinder shape, i.e. a mold having a cavity of a desired gas cylinder shape. The mold may have a shape of a gas cylinder which may be or may not be fitted with a cylinder mouthpiece. When a mold having a shape of a gas cylinder which is not fitted with a cylinder mouthpiece is used, the molded product resulting from the compression molding or hot forming may be processed at least at one end thereof, for exmaple, by cutting out a recess in which a flange of a cylinder mouthpiece may be fitted. The form of a gas cylinder may be, for example, a shape of a cylinder having a dome at both ends.

The starting materials to be introduced into the mold for compression molding include the carbonaceous gas storage material, and optionally a binder and a solvent. The use of a binder and/or a solvent may suitably be decided depending on the kind of the carbonaceous gas storage material or the conditions for compression.

The binder may usually be a resin material, such as PVDF, PTFE, carboxymethylcellulose, or a mixture of two or more of these.

The solvent may be, for example, water, acetone, methyl ethyl ketone, ethanol, methanol, isopropyl alcohol, t-butanol, N-methylpyrrolidone, or a mixture of two or more of these.

The contents of the binder and the solvent may vary depending on the kind of the carbonaceous hydrogen storage material, but may preferably be 0 to 30 parts by mass for the binder and 0 to 150 parts by mass for the solvent, based on 100 parts by mass of the carbonaceous hydrogen storage material. For stabilizing the shape, a higher content of binder is preferred, but for the gas storage capacity, a lower content is preferred.

The pressure conditions for the compression molding may be such as to hold at about 10 to 20 N for about 1 minute, and are preferably decided depending on the composition of the starting materials so that the resulting molded product is given a bulk density of 0.2 to 2.1 g/ml.

The molded product obtained by compression molding is demolded and dried. The drying may be air drying, drying by heating, vacuum drying, or drying by heating in vacuum, with drying by heating in vacuum being preferred. The drying may be performed, for example, after a reduced pressure is created by means of a vacuum pump, at preferably 40 to 170 °C, more preferably 70 to 120 °C, for 10 to 15 hours.

The hot forming may be employed when the carbonaceous gas storage material is in the form of gel, such as carbon aerogel, carbon cryogel, or carbon xerogel. The hot forming may be performed, for example, by introducing a gel precursor into the mold, hot forming, demolding the resulting gel molded product, drying, and calcining the dried gel in a furnace.

The gel precursor may be, for example, a mixture of resorcinol, a formaldehyde solution, sodium carbonate, and water. The content of each component in the gel precursor may preferably be, based on 100 parts by mass of resorcinol, 140 to 150 parts by mass of a 37% formaldehyde solution, 0.1 to 2 parts by mass of sodium carbonate, and 100 to 600 parts by mass of water.

The gel precursor may be molded and solidified usually at room temperature for 2 days, and then at 60 to 80 °C for 12 hours. The resulting gel molded product may be dried by supercritical drying, lyophilizing, drying by heating in vacuum, or air drying, with drying by heating in vacuum being preferred in view of the drying efficiency. The dryingmaypreferablybe performed, after a reducedpressure is created by means of a vacuum pump, at 70 to 120 °C for 10 to 15 hours. The dried gel may be calcined by heating the dried gel up to 1000 °C at a heating rate of 5 °C/min, and holding at 1000 °C for about 4 hours.

In the preparation step, depending on the kind of the carbonaceous gas storage material, the shaping may alternatively be performed, instead of compression molding or hot forming, by pouring the starting materials containing a solvent over a filter to shape the carbonaceous gas storage material into a sheet form, and rolling the resulting sheet into the form of a gas cylinder. For example, when the carbonaceous gas storage material is carbon nanotubes, the process may include mixing the nanotubes with a solvent, such as acetone, shaping the material into a sheet form, shaping the resulting sheet into the form of a gas cylinder, and drying by heating in vacuum. Here, the product shaped into the form of a gas cylinder may have irregularities in its ends or on its surface. Such surface irregularities may preferably be treated by abrasion, whichmaybe performed with, for example, a sand paper.

The gas cylinder-shaped product obtained by the preparation step has a bulk density of usually 0.2 to 2.1 g/ml, preferably 0.5 to 2.1 g/ml. At less than 0.2 g/ml, the effect of improving the gas storage capacity is little, whereas at over 2 .1 g/ml, hydrogen dispersion into the shaped product may remarkably be deteriorated, or the internal structure of the hydrogen storage material may be collapsed.

According to the method for producing a gas cylinder of the present invention, the step of fixing a cylinder mouthpiece on the gas cylinder-shaped product produced in the preparation step is performed.

The cylinder mouthpiece may be fixed immediately after the preparation step, or alternatively, after the covering step to be discussed later. The mouthpiece may be fixed by embedding a flange of the mouthpiece in at least one recess for fitting a cylinder mouthpiece therein provided in the gas cylinder-shaped product.

The mouthpiece may be similar to those used with common resin liners. For example, a mouthpiece described in JP-3-89098-A may be used. The type of the mouthpiece may suitably be selected depending on the working pressure range of the gas cylinder. In view of the strength, the mouthpiece may preferably be made of metal, such as carbon steel, stainless steel, aluminum, or titanium. The mouthpiece is usually provided with a flange for giving pressure resistance.

According to the method for producing a gas cylinder of the present invention, after the preparation step or the mouthpiece fixing step, the first covering step is performed by covering the outer surface of the gas cylinder-shaped product with a substantially gas barrier material.

In the first covering step, the substantially gas barrier material is a material substantially impermeable to gas, and may be, for example, a gas barrier resin material or an aluminum alloy.

Examples of the gas barrier resin material may include polyethylene, polypropylene, polycarbonate, polyacrylonitrile, polymethylacylate, polyimide, polyvinylidene chloride, polyvinylchloride, and polytetrafluoroethylene.

The thickness of the covering layer made of the resin material may suitably be selected depending on the working pressure range of the gas cylinder to be produced, and is usually 0.2 to 5 cm, preferably 1 to 2 cm.

The covering with the resin material may be performed by, for example, injection molding. More specifically, the injection molding may be performed by placing the gas cylinder-shaped product in a mold having a cavity of the size of the gas cylinder-shaped product plus the thickness of the covering layer of the resin material, and injecting the resin material into the mold to cover the gas cylinder-shaped product with the resin material.

When the resin material is thermoplastic, the covering step may be performed by injecting the resin in a molten state into the mold containing the gas cylinder-shaped product, and heating the mold to cure. Alternatively, when the resin material is a resin other than the thermoplastic resin, the covering step may be performed by injecting a precursor of the resin into the mold containing the gas cylinder-shaped product, and heating the mold to cure.

The molding machine used for performing the covering with a resin material is preferably designed so as to cover the cylinder mouthpiece only on its flange.

Another method of covering with a resin material employs a bag of a heat shrinkable resin. For example, a bag made of a heat shrinkable resin, such as polyethylene, is placed over the gas cylinder-shaped product, and hot air is blown to the bag to shrink and cure the heat shrinkable resin, thereby forming the covering.

The cured resin may have irregularities on its outer surface, so that it is preferred to abrade the surface to smooth it in order for the fiber reinforced plastic (FRP) layer to be formed in the following step to exhibit its strength.

The method for covering with an aluminum alloy may be performed, for example, by placing a tube made of an aluminum alloy over the gas cylinder-shaped product, and squeezing the ends of the tube. The thickness of the aluminum alloy may suitably be decided depending on the working pressure range of the gas cylinder to be produced, and is usually 0.1 to 1 cm, preferably 0.2 to 0.5 cm. The aluminum alloy tube may be squeezed to conform to a certain shape of the gas cylinder-shaped product. This may result in increased thickness of the aluminum alloy, which is, however, usually within 3 cm.

According to the method for producing a gas cylinder of the present invention, the second covering step is performed by covering with FRP the outer surface of the covering of the gas barrier material produced in the first covering step.

In the second covering step, the covering of the outer surface with FRP may preferably be performed by the filament winding method (FW method). The FW method is a method wherein fibers (fiber bundles) impregnated with a matrix resin are continuously wound around a rotating molded product, and then cured and shaped by heating.

There are two types of FW method, namely the wet FW method, wherein the fibers to be used are being impregnated with a matrix resin in a wet process while they are wound around the molded product, and the dry FW method, wherein tow prepreg prepared in advance by impregnating fiber tows with a matrix resin, is wound around the molded product. Either method may be employed in the method of the present invention, but the dry FW method using tow prepreg is preferred for easy production and for the controllability of the amount of the matrix resin.

For preferable winding in the FW method, hoop winding, helical winding, and in-plane winding are combined according to the shape and pressure resistance of the gas cylinder-shaped product. The specific winding manner may be designed with reference to "Fukugo Zairyo Handbook (Composite Material Handbook)", p863-874, November 20, 1989, edited by The Japan Society for Composite Materials.

The fibers mentioned above may be, for example, carbon fibers, glass fibers, aramid fibers, or silicon carbide fibers, with carbon fibers beingpreferred for its stiffness and light weight. The carbon fibers may be categorized into the polyacrylonitrile (PAN)-based carbon fibers of 230 to 490 GPa and the pitch-based carbon fibers of 490 to 950 GPa, and either may be used in the present invention. The pitch-based carbon fibers are characterized by their high elasticity, whereas the PAN-based carbon fibers are characterized by their high tensile strength.

Preferred examples of the matrix resin may include thermosetting resins, such as epoxy, phenol, cyanate, unsaturated polyester, polyimide, and bismaleimide resins. The thermosetting resin may be mixed with fine particles of rubber or resin, or with a thermoplastic resin dissolved therein, in order to give impact resistance and toughness to the resin.

It is sufficient that the method for producing a gas cylinder of the present invention includes the above-mentioned steps, but the present invention may optionally include additional steps, if desired. For example, in addition to the first and second covering steps, another covering step may be included.

The gas cylinder according to the present invention is a gas cylinder, such as a hydrogen storage cylinder, produced by the method of the present invention, and includes a gas cylinder-shaped product including a carbonaceous gas storage material, a covering layer covering the gas cylinder-shaped product and having a gas barrier material layer and a fiber reinforced plastic layer, and a mouthpiece having a gas introducing function and a gas discharging function.

The gas cylinder-shaped product preferably has the preferred bulk density discussed above. The covering layer, including the gas barrier material layer and the fiber reinforced plastic layer, may include other covering layers in addition thereto. The mouthpiece may be provided with both the gas introducing and gas discharging functions, or alternatively, two separate mouthpieces may be used each having a gas introducing function or a gas discharging function.

The method for storing/discharging gas according to the present invention encompasses a gas storing step including connecting the mouthpiece of the gas cylinder to a gas introduction pipe, introducing gas through the gas introduction pipe into the gas cylinder, and sealing the gas in the gas cylinder, and a gas discharging step including discharging the gas sealed in the gas cylinder.

Upon introducing gas into the gas cylinder, the gas pressure is preferably not lower than the atmospheric pressure.

The gas storage/discharge may be performed not only at room temperature, but also under a suitably combined cooling and/or heating. For example, when the gas is hydrogen, the temperature for storing/discharging may be controlled, for example, according to the following combinations: both storage and discharge near room temperature; storage at a lower temperature and discharge near room temperature; storage at a lower temperature and discharge at a higher temperature; or storage near room temperature and discharge at a higher temperature.

Here, the terms, "near room temperature", "a lower temperature", and "a higher temperature" mean relative temperatures in working, and "near room temperature" may preferably mean 0 to 40 °C, "a lower temperature" -196 to 0 °C, and "a higher temperature" 40 to 100 °C.

The present invention will now be explained in further detail with reference to Examples and Comparative Examples, which are illustrative only and are not intended to limit the present invention.

### Example 1

300 g of activated carbon having hydrogen storage capacity of 0.4 mass% as measured by volumetric method at room temperature at 3 MPa, 30 g of PVDF, and 150 g of acetone were stirred at 50°C. The resulting mixture was poured under heating into a mold of a gas cylinder shape having an inner diameter of 6 cm and a length of 20 cm, and held under the pressure of 20 N for 1 minute. The molded product was demolded, dried in a vacuum dryer at 70 °C for 12 hours, and abraded to adjust the configuration, to thereby obtain a gas cylinder-shaped product capable of being fitted with a cylinder mouthpiece. The resulting shaped product had a bulk density of 0.7 g/ml.

After a mouthpiece was fixed on the gas cylinder-shaped product, the shaped product with the mouthpiece was placed in an injection mold, and polyethylene molten under heating was injected into the mold to form a covering layer of polyethylene. The surface irregularities of the covering layer were removed by abrasion. The thickness of the covering layer thus formed was 0.9 to 1.1 cm in actual measurement, with respect to the designed thickness of 1 cm.

Next, onto the outer surface of the gas cylinder-shaped product having the rein covering layer, tow pregreg of PAN-based carbon fibers of 230 GPa impregnated with 20 mass% of epoxy resin, was wound by the FW method. The winding was performed in accordance with a program designed by the finite element method so that the resulting gas cylinder had a pressure resistance of 10 MPa.

The gas tightness of the gas cylinder thus obtained was confirmed by charging the cylinder with hydrogen at 3 MPa, leaving the cylinder for 7 days, and measuring the decrease in pressure. It was determined that the decrease in pressure was not higher than 0.1 MPa.

Further, the hydrogen storage capacity of the gas cylinder was determined by charging the cylinder with hydrogen at 3 MPa and measuring the amount of desorbed hydrogen. It was determined that the amount of desorbed hydrogen was 23.5 liters. For comparison, a hollow steel gas cylinder of the same volume was charged with hydrogen at 3 MPa, and the amount of desorbed hydrogen was measured. It was determined that the amount of desorbed hydrogen was only 16.1 liters. Accordingly, the effectiveness of the gas cylinder of the present invention was confirmed.

### Example 2

300 g of resorcinol, 450 g of a 37 % formaldehyde solution, 3 g of sodium carbonate, and 1200 g of purified water were mixed, poured into a mold of a gas cylinder shape having an inner diameter of 8 cm and a length of 26 cm, and reacted at room temperature for 2 days and subsequently at 60 °C for 12 hours, to obtain a gel molded product. The gel molded product was demolded, and dried by heating in vacuum at 70 °C for 10 hours. The resulting dried product was placed in a carbonization furnace, heated up to 1000 °C at the heating rate of 5 °C/min, and held at 1000 °C for 4 hours to carbonize. The surface of the gel molded product was relatively smooth, but was changed through carbonization. Thus the carbonized product was cut and abraded into a gas cylinder shape having a diameter of 6 cm and a length of 20 cm, to thereby obtain a gas cylinder-shaped product capable of being fitted with a cylinder mouthpiece. The shaped product thus obtained had a bulk density of 0.6 g/ml.

After a mouthpiece was fixed on the gas cylinder shaped product, the shaped product with the mouthpiece was placed in an injection mold, and polyethylene molten under heating was injected into the mold to form a covering layer of polyethylene. The surface irregularities of the covering layer were removed by abrasion. The thickness of the covering layer thus formed was 0.9 to 1.1 cm in actual measurement, with respect to the designed thickness of 1 cm.

Next, onto the outer surface of the gas cyinder-shaped product having the resin covering layer, tow prepreg of PAN-based carbon fibers of 230 GPa impregnated with 20 mass% of epoxy resin, was wound by the FR method. The winding was performed in accordance with a program designed by the finite element method so that the resulting gas cylinder had a pressure resistance of 10 MPa.

The gas tightness of the gas cylinder thus obtained was confirmed by charging the cylinder with hydrogen at 3 MPa, leaving the cylinder for 7 days, and measuring the decrease in pressure. It was determined that the decrease in pressure was not higher than 0.1 MPa.

Further, the hydrogen storage capacity of the gas cylinder was determined by charging the cylinder with hydrogen at 3 MPa and measuring the amount of desorbed hydrogen. It was confirmed that the amount of desorbed hydrogen was 25.3 liters. For comparison, a hollow steel gas cylinder of the same volume was charged with hydrogen at 3 MPa, and the amount of desorbed hydrogen was measured. It was determined that the amount of desorbed hydrogen was only 16.1 liters. Accordingly, the effectiveness of the gas cylinder of the present invention was confirmed.

### Example 3

200 g of single-walled carbon nanotubes having hydrogen storage capacity of 0.5 mass% as measured by volumetric method at room temperature at 3 MPa were mixed with 100 g of acetone and stirred, and the resulting mixture was applied over a filter paper placed on wire mesh to form a film. The applied mixture was smoothed with a round bar into a uniform thickness, and left overnight to dry. The dried carbon nanotubes were in the form of a sheet, which was rolled into a columnar mass having a diameter of about 6 cm and a length of about 20 cm. The columnar mass was dried in a vacuum dryer at 70 °C for 12 hours for completely removing acetone, and abraded on its surface to thereby obtain a gas cylinder-shaped product. The resulting shaped product had a bulk density of 0.5 g/ml.

After a mouthpiece was fixed on the gas cylinder-shaped product, an aluminum tube closed at one end having an inner diameter of 6 cm, a length of 23 cm, and a thickness of 0.3 cm, was placed over the shaped product, and the open end of the tube was squeezed into tight contact with the mouthpiece, and brazed thereto.

Next, onto the outer surface of the gas cylinder-shaped product having the aluminum alloy covering layer, tow prepreg of PAN-based carbon fibers of 230 GPa impregnated with 20 mass% of epoxy resin, was wound by the FW method. The winding was performed in accordance with a program designed by the finite element method so that the resulting gas cylinder had a pressure resistance of 35 MPa.

The gas tightness of the gas cylinder thus obtained was confirmed by charging the cylinder with hydrogen at 3 MPa, leaving the cylinder for 7 days, and measuring the decrease in pressure. It was determined that the decrease in pressure was not higher than 0.1 MPa.

Further, the hydrogen storage capacity of the gas cylinder was determined by charging the cylinder with hydrogen at 3 MPa and measuring the amount of desorbed hydrogen. It was determined that the amount of desorbed hydrogen was 24.8 liters. For comparison, a hollow steel gas cylinder of the same volume was charged with hydrogen at 3 MPa, and the amount of desorbed hydrogen was measured. It was determined that the amount of desorbed hydrogen was only 16.1 liters. Accordingly, the effectiveness of the gas cylinder of the present invention was confirmed.

### Comparative Example 1

Activated carbon having hydrogen storage capacity of 0.4 mass% as measured by volumetric method at room temperature at 3 MPa was poured into a hollow steel gas cylinder having an inner diameter of 6 cm and a length of 20 cm, through the opening of the cylinder, and 107 g of the activated carbon could be packed in the cylinder. Since the threads on the mouthpiece were contaminated with the activated carbon, the threads were wiped with a cloth, but the carbon could hardly be removed completely. A valve was fixed to the resulting gas cylinder to thereby obtain a hydrogen storage cylinder.

The gas tightness of the gas cylinder thus obtained was confirmed by charging the cylinder with hydrogen at 3 MPa, leaving the cylinder for 7 days, and measuring the decrease in pressure. It was determined that the decrease in pressure was not higher than 0.7 MPa.

Further the hydrogen storage capacity of the gas cylinder was determined by charging the cylinder with hydrogen at 3 MPa and measuring the amount of desorbed hydrogen. It was determined that the amount of desorbed hydrogen was 19.5 liters.

## Claims

1. A method for producing a gas cylinder comprising the steps of:
preparing a gas cylinder-shaped product by shaping a carbonaceous gas storage material into the form of a gas cylinder capable of being fitted with a cylinder mouthpiece,
fixing a cylinder mouthpiece on said gas cylinder-shaped product,
first covering of the outer surface of the gas cylinder-shaped product with a substantially gas barrier material, and
second covering of the outer surface of a covering of the gas barrier material, with fiber reinforced plastic.

2. The method of claim 1, wherein said gas barrier material is selected from the group consisting of gas barrier resin materials and aluminum alloys.

3. The method of claim 1, wherein said carbonaceous gas storage material is a carbonaceous material having gas storage capacity of 0.2 to 2 mass% at 30 °C at 3 MPa.

4. The method of claim 1, wherein said carbonaceous gas storage material is a carbonaceous material capable of storing hydrogen.

5. The method of claim 1, wherein said shaping of a carbonaceous gas storage material in said step of preparing a gas cylinder-shaped product is performed by introducing starting materials including the carbonaceous gas storage material and a binder into a mold having a gas cylinder-shaped cavity, and compression molding.

6. The method of claim 1, wherein said shaping of a carbonaceous gas storage material in said step of preparing a gas cylinder-shaped product is performed under such conditions as to give a gas cylinder-shaped product having a bulk density of 0.2 to 2.1 g/ml.

7. A gas cylinder produced by the method of claim 1, comprising:
a gas cylinder-shaped product including a carbonaceous gas storage material;
a covering layer covering said gas cylinder-shaped product and having a gas barrier material layer and a fiber reinforced plastic layer; and
a mouthpiece having a gas introducing function and a gas discharging function.

8. A method for storing/discharging gas comprising:
a gas storing step including connecting the mouthpiece of the gas cylinder of claim 7 to a gas introduction pipe, introducing gas through the gas introduction pipe into the gas cylinder, and sealing the gas in the gas cylinder, and
a gas discharging step including discharging the gas sealed in the gas cylinder.

9. The method of claim 8, wherein said gas is hydrogen.
